# EUROPEAN PATENT APPLICATION

(11) **EP 4 431 214 A1**
(43) Date of publication of application: **18.09.2024**
(21) Application number: 21968123.6
(22) Date of filing: 15.12.2021
(51) Int. Cl.: B23H 7/20

(54) **MAP-DATA-EDITING DEVICE, PROCESSING PROGRAM CREATION DEVICE, AND MAP-DATA-EDITING METHOD**

(71) Applicant: FANUC CORPORATION, Oshino-mura Minamitsuru-gun Yamanashi 401-0597 (JP)
(72) Inventor: ABE, Hiroyuki, Yamanashi 401-0597 (JP)
(74) Representative: Keil & Schaafhausen Patentanwälte PartGmbB
(86) International application number: PCT/JP2021/046281
(87) International publication number: WO 2023/112207

(57) **Abstract**

This map-data-editing device (10) comprises: a map acquisition unit (26) for acquiring map data (20); a group creation unit (28) for grouping processing shapes (24) that are congruent with or similar to each other; a pathway addition unit (46) for adding a first approach pathway (52) to the map data (20) in accordance with an operation by an operator; and an automatic pathway addition unit (48) for automatically adding a second approach pathway (58) to the map data (20), the second approach pathway (58) being linked to a second processing shape (24) that is in the same group as a first processing shape (24).

## Description

### TECHNICAL FIELD

The present invention relates to a map-data-editing device (figure data edit device), a processing program creation device (machining program creation device), and a map-data-editing method (figure data edit method) that edits figure data for creating a machining program for a wire electric discharge machine.

### BACKGROUND ART

A wire electrode of a wire electric discharge machine moves relative to a workpiece. This relative movement is controlled based on a machining program. The machining program is created based on CAD (Computer Aided Design) data representing a figure of a machining shape. The CAD data includes a plurality of machining shapes followed by the wire electrode.

However, the machining shapes indicate the shapes of the products produced by the wire electric discharge machine. In other words, the machining shapes do not indicate a machining start position and an approach path. The machining start position is the position where the wire electrode starts relative movements. The approach path is a path (line shape) connecting the machining start position and the machining shape.

An operator in charge of creating a machining program adds machining start positions and approach paths to figure data according to machining shapes before creating the machining program. The machining program is created based on CAD data to which the machining start positions and the approach paths have been added.

However, the work of adding the machining start position and the approach path to each of the machining shapes in the figure data many times is a burden for an operator. In this regard, JP H03-189708 A discloses a machining shape copying method. According to the disclosure, when a machining shape is copied, the machining start position corresponding to the machining shape is also copied.

### SUMMARY OF THE INVENTION

Based on the above machining shape copying method, for example, when a machining shape is copied, one may consider copying not only the machining start position but also the approach path.

However, there is a case where an operator edits figure data that contains machining shapes beforehand. When an approach path has not yet been assigned to each of the machining shapes, the operator performs an operation of adding the approach path to the figure data. Here, the operator does not copy the machining shape. Therefore, the operator has to perform operations of adding the machining start position and the approach path to the machining shape many times.

The present invention aims to solve the above-mentioned problems.

The first aspect of the present invention is a figure data edit device for editing figure data indicating a plurality of machining shapes based on which a wire electric discharge machine machines one workpiece, the figure data edit method comprising: a figure acquisition unit that acquires the figure data; a group creation unit that groups the plurality of machining shapes into groups in each of which shapes are congruent or similar to each other; a path addition unit that adds a first approach path leading to a first machining shape, which is any one of the plurality of machining shapes, to the figure data in response to an operation of an operator; and an automatic path addition unit that automatically adds a second approach path leading to a second machining shape belonging to the same group as the first machining shape to the figure data so as to be congruent or similar to a figure formed by the first machining shape and the first approach path.

A second aspect of the present invention is a machining program creation device including: a figure data edit device according to the first aspect; and a machining program creation unit that creates, based on the figure data, a machining program for instructing a relative movement of a wire electrode of the wire electric discharge machine with respect to the workpiece.

A third aspect of the present invention is a figure data edit method for editing figure data indicating a plurality of machining shapes based on which a wire electric discharge machine machines one workpiece, comprising: a figure acquisition step that acquires the figure data; a group creation step that groups the plurality of machining shapes into groups in each of which shapes are congruent or similar to each other; a path addition step that adds a first approach path leading to a first machining shape, which is any one of the plurality of machining shapes, to the figure data in response to an operation of an operator; and an automatic path addition step that automatically adds a second approach path leading to a second machining shape belonging to the same group as the first machining shape to the figure data so as to be congruent or similar to a figure formed by the first machining shape and the first approach path.

According to the present invention, it is easy to add approach paths to machining shapes included in the figure data.

### BRIEF DESCRIPTION OF DRAWINGS

FIG. 1 is a schematic block diagram of a figure data edit device according to an embodiment;
FIG. 2 is a diagram illustrating figures displayed on a display screen based on figure data;
FIG. 3 is a diagram illustrating edges of each of machining shapes;
FIG. 4A is a table illustrating a first order;
FIG. 4B is a table illustrating a second order;
FIG. 5 is a table illustrating a result of grouping machining shapes;
FIG. 6 is a diagram illustrating figure data after a first path addition unit edits the figure data;
FIG. 7 is a diagram showing figure data of FIG. 6 after a second path addition unit edits the figure data;
FIG. 8 is a flowchart illustrating a flow of a figure data edit method according to an embodiment;
FIG. 9 is a diagram illustrating figure data according to a first modification;
FIG. 10A is a table illustrating a second order according to a first modified example; FIG. 10B is a table showing the order in which the second order in FIG. 10A has been reversed; and
FIG. 11 is a schematic block diagram of a machining program creation device including a figure data edit device.

### DETAILED DESCRIPTION OF THE INVENTION

### [Embodiment]

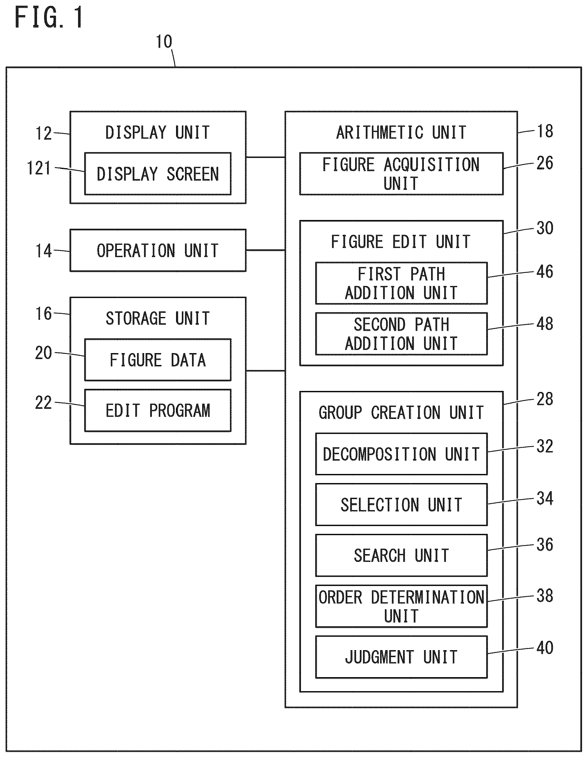

FIG. 1 is a schematic block diagram of a figure data edit device 10 according to an embodiment.

The figure data edit device 10 is an electronic device (computer) including a display unit 12, an operation unit 14, a storage unit 16, and an arithmetic unit 18.

The display unit 12 is a display device having a display screen 121. Information is displayed on the display screen 121 as appropriate. The material of the display unit 12 includes liquid crystals. However, the material of the display unit 12 is not limited to liquid crystals. For example, the material of the display unit 12 may include OEL (Organic Electro-Luminescence).

The operation unit 14 is an input device that accepts information input by an operator. The operation unit 14 includes, for example, a mouse, a keyboard, and a touch pad. The operation unit 14 may include a touch panel. In this case, the touch panel is attached to the display screen 121.

The storage unit 16 has one or more memories. For example, the storage unit 16 includes a R_AM (Random Access Memory) and a ROM (Read Only Memory). The storage unit 16 stores figure data 20 and an edit program 22.

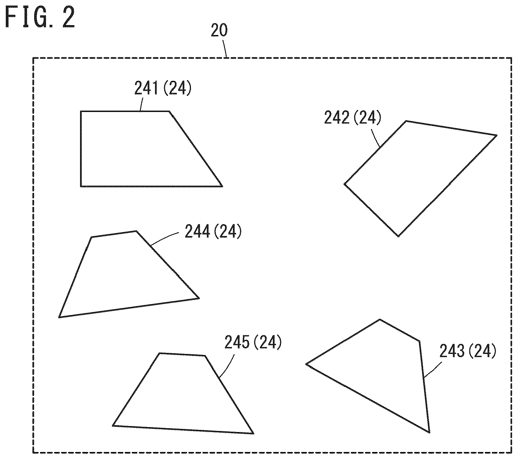

FIG. 2 is a diagram illustrating figures displayed on the display screen 121 based on the figure data 20.

The figure data 20 is data representing machining shapes 24. The figure data 20 is a data file created using, for example, a CAD system.

The machining shape 24 indicates a shape to be machined by the wire electric discharge machine. The figure data 20 in FIG. 2 includes machining shapes 24 to be machined by the wire electric discharge machine for one workpiece. The figure data 20 in FIG. 2 includes five machining shapes 24 (241, 242, 243, 244, 245) for illustrative purposes.

Each of the machining shapes 24 is in the form of a loop. To this extent, the shape of the machining shape 24 is not limited. Each of the machining shapes 24 illustrated in FIG. 2 is a trapezoid (polygon).

The edit program 22 is a program for causing the figure data edit device 10 to execute the figure data edit method of the present embodiment. The figure data edit method will be described later.

The arithmetic unit 18 has one or more processors. For example, the arithmetic unit 18 includes a CPU (Central Processing Unit) and a GPU (Graphics Processing Unit). The arithmetic unit 18 can refer to the information stored in the storage unit 16 as appropriate.

The arithmetic unit 18 includes a figure acquisition unit 26, a group creation unit 28, and a figure edit unit 30. The figure acquisition unit 26, the group creation unit 28, and the figure edit unit 30 are realized by the arithmetic unit 18 executing the edit program 22.

The figure acquisition unit 26 acquires the figure data 20. The figure acquisition unit 26 acquires the figure data 20 by referring to the storage unit 16.

However, the figure acquisition unit 26 may acquire the figure data 20 from an external device of the figure data edit device 10 by communicating with the external device. In this case, the figure data edit device 10 and the external device are communicably connected. The external device of the figure data edit device 10 is, for example, a computer such as a computerized numerical controller (CNC) that controls the wire electric discharge machine. The figure acquisition unit 26 may acquire the figure data 20 from a removable external storage medium such as a USB (Universal Serial Bus) memory.

The group creation unit 28 divides the machining shapes 24 indicated by the figure data 20 into groups in each of which shapes are congruent with each other. To perform this grouping, the group creation unit 28 includes a decomposition unit 32, a selection unit 34, a search unit 36, an order determination unit 38, and a judgment unit 40.

The decomposition unit 32 decomposes each of the machining shapes 24 into figure elements. The figure elements are, for example, line segments (edges).

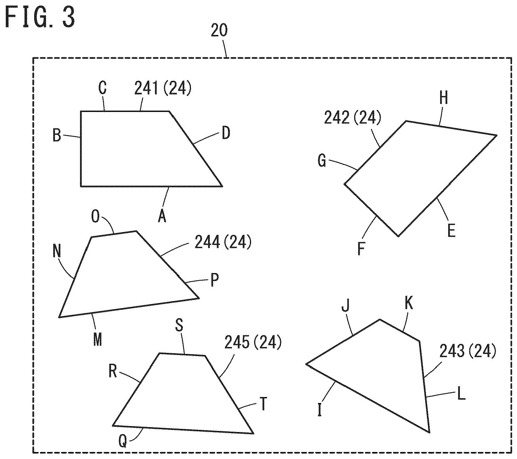

FIG. 3 is a diagram illustrating edges of each of machining shapes 24.

For example, the machining shape 241 is a trapezoid (polygon) formed by four edges, namely, an edge A, an edge B, an edge C, and an edge D. Therefore, the decomposition unit 32 decomposes the machining shape 241 into the edge A, the edge B, the edge C, and the edge D.

Similarly, the machining shape 242 is decomposed into an edge E, an edge F, an edge G, and an edge H. The machining shape 243 is decomposed into an edge I, an edge J, an edge K, and an edge L. The machining shape 244 is decomposed into an edge M, an edge N, an edge O, and an edge P. The machining shape 245 is decomposed into an edge Q, an edge R, an edge S, and an edge T. The decomposition results (edges of the machining shapes 24) are stored in the storage unit 16.

The selection unit 34 selects one ungrouped machining shape 24 from the machining shapes 24. When there are a plurality of ungrouped machining shapes 24, the selection unit 34 may randomly select one from the ungrouped machining shapes 24. When there are a plurality of ungrouped machining shapes 24, the selection unit 34 may select one based on a predetermined rule.

Here, for the sake of illustration, the selection unit 34 selects the machining shape 241. The machining shape 241 selected by the selection unit 34 is also referred to as a selected machining shape 241 in the following description.

The search unit 36 selects one of the edges (edges A to D) forming the selected machining shape 241. The search unit 36 may randomly select any one of the edges from the selected machining shape 241. The selection unit 34 may select any one of the edges of the selected machining shape 241 based on a predetermined rule.

Here, for the sake of illustration, the search unit 36 selects the edge A. The edge A selected by the search unit 36 from the selected machining shape 241 is also referred to as a first edge A in the following description.

The machining shape 24 congruent with the selected machining shape 241 necessarily includes one second edge having the same length as the first edge A. Based on this, the search unit 36 searches for the second edge (the edge with the same length as the first edge A) among each of the machining shapes 242 to 245 other than the selected machining shape 241. Thus, the machining shape 24 that can be congruent with the selected machining shape 241 is identified.

Here, for the sake of illustration, only the edge E of the machining shape 242 is the edge with the same length as the first edge A. The edge E is also referred to as the second edge E in the following description.

The order determination unit 38 determines the order (first order) of the edges of the selected machining shape 241 and the order (second order) of the edges of the machining shape 242 including the second edge E.

The first order is determined based on the first edge A and a predetermined cyclic direction. The predetermined cyclic direction is a right-handed (clockwise) direction or a left-handed (counterclockwise) direction. For the sake of illustration, the predetermined cyclic direction is the clockwise direction.

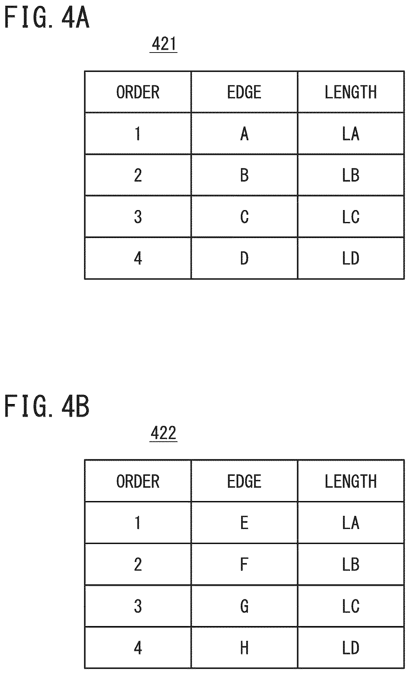

FIG. 4A is a table 421 illustrating the first order. The first column (order) of the table 421 indicates the first order. The second column (edge) of the table 421 indicates a name of each edge forming the selected machining shape 241. The third column (length) of the table 421 shows the length of each edge forming the selected machining shape 241.

The selected machining shape 241 includes the edge B, the edge C, and the edge D in this order along the clockwise direction from the first edge A. In this case, the first order is, for example, the order in which the first edge A, the edge B, the edge C, and the edge D are arranged in this order.

FIG. 4B is a table 422 illustrating the second order. The format of the table 422 is the same as that of the table 421. However, the first column (order) of the table 422 indicates the second order.

The machining shape 242 includes the edge F, the edge G, and the edge H in this order along the clockwise direction from the second edge E. In this case, the second order is the order in which the second edge E, the edge F, the edge G, and the edge H are arranged in this order.

The storage unit 16 stores the contents of the table 421 (first order) and the contents of the table 422 (second order).

The judgment unit 40 associates the edges (edges B to D) excluding the first edge A of the selected machining shape 241 with the edges (edges F to H) excluding the second edge E of the machining shape 242.

The comparison judgment unit 40 associates the edges B to D with the edges F to H based on the first order and the second order. For example, the edge B in the second position in the first order is associated with the edge F in the second position in the second order. The edge C in the third position in the first order is associated with the edge G in the third position in the second order. The edge D in the fourth position in the first order is associated with the edge H in the fourth position in the second order.

The comparison judgment unit 40 judges whether the edges B to D of the selected machining shape 241 and the edges corresponding to the edges B to D among the edges F to H of the machining shape 242 are the same length. That is, the judgment unit 40 judges whether (1) the length of the edge B = the length of the edge F, (2) the length of the edge C = the length of the edge G, and (3) the length of the edge D = the length of the edge H.

When the edges B to D of the selected machining shape 241 and the edges corresponding to the edges B to D among the edges F to H of the machining shape 242 are the same length, the judgment unit 40 calculates the area of the selected machining shape 241 and the area of the machining shape 242. The judgment unit 40 compares the area of the selected machining shape 241 with the area of the machining shape 242.

When the area of the selected machining shape 241 and the area of the machining shape 242 are the same, the judgment unit 40 judges that the selected machining shape 241 and the machining shape 242 are congruent. When it is determined that the selected machining shape 241 and the machining shape 242 are congruent, the group creation unit 28 classifies the machining shape 242 into the same group as the selected machining shape 241.

If each of the machining shapes 243 to 245 also includes the second edge, the group creation unit 28 determines whether each of the machining shapes 243 to 245 is congruent with the selected machining shape 241 using the order determination unit 38 and the judgment unit 40.

However, as described above, each of the machining shapes 243 to 245 does not include the second edge having the same length as the first edge A. Thus, the machining shapes 243 to 245 are not congruent at least with the selected machining shape 241.

In this case, the group creation unit 28 judges whether the machining shapes 243 to 245 are congruent. In this case, the machining shape 243, the machining shape 244, or the machining shape 245 is newly selected as the selected machining shape 24. The description of the process of judging whether the machining shapes 243 to 245 are congruent based on the selected machining shape 24 that was newly selected is substantially a duplicate of the above description and thus will be omitted.

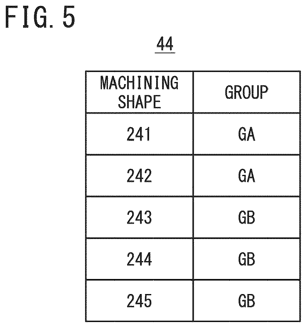

FIG. 5 is a table 44 illustrating results of grouping the machining shapes 24. The first column of the table 44 shows the names of the machining shapes 24. The second column of the table 44 indicates a group to which each machining shape 24 belongs.

The grouping result exemplified in FIG. 5, for example, is obtained by the group creation unit 28 grouping all the machining shapes 24 in the figure data 20. According to FIG. 5, the machining shape 241 and the machining shape 242 belong to the same group GA. Further, the machining shapes 243, 244, and 245 belong to the same group GB. The grouping result is stored in the storage unit 16.

The figure edit unit 30 includes a first path addition unit (path addition unit) 46 and a second path addition unit (automatic path addition unit) 48.

The first path addition unit 46 adds a machining start position (first machining start position) 50 and an approach path (first approach path) 52 to the figure data 20 in accordance with an operation of the operator. The figure data 20 edited by the first path addition unit 46 is displayed on the display screen 121.

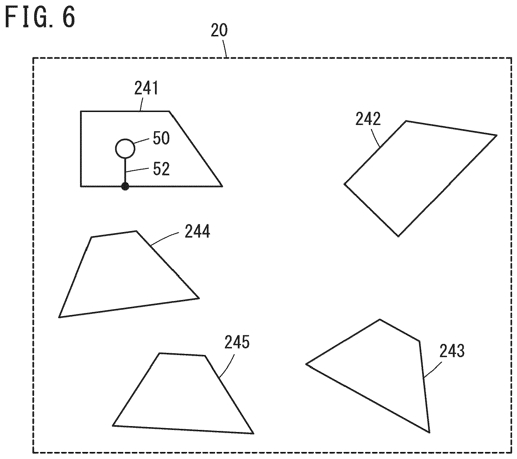

FIG. 6 is a diagram illustrating the figure data 20 after being edited by the first path addition unit 46.

The machining start position 50 indicates the initial position of the wire electrode that performs machining along any one of the machining shapes 24. Here, any one of the machining shapes 24 is arbitrarily selected by the operator via the operation unit 14.

Here, for the sake of illustration, the operator selects a machining shape 241 (see FIG. 3). The machining shape 241 selected by the operator is also referred to as the first machining shape 241 in the following description. A hole through which the wire electrode can be inserted is formed at a position of an actual workpiece indicated by the machining start position 50.

The approach path 52 is a path followed by the wire electrode, connecting the machining start position 50 and the first machining shape 241.

When the approach path 52 leading to the first machining shape 241 is assigned to the figure data 20, the second path addition unit 48 identifies the second machining shape 24 belonging to the same group GA as the first machining shape 241 based on the grouping result (FIG. 5). Here, only the machining shape 242 is identified as the second machining shape 24.

The second path addition unit 48 automatically edits the figure data 20 as follows based on the result of identifying the second machining shape 242.

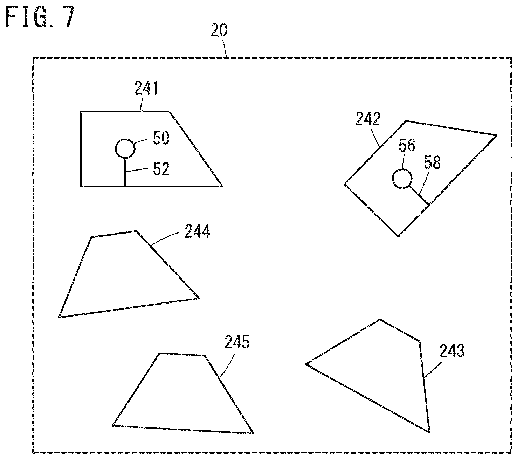

FIG. 7 is a diagram showing the figure data 20 of FIG. 6 after being edited by the second path addition unit 48.

The second path addition unit 48 automatically adds a machining start position (second machining start position) 56 and an approach path (second approach path) 58 to the figure data 20. The machining start position 56 indicates the initial position of the wire electrode for machining the second machining shape 242. The approach path 58 is a path leading to the second machining shape 242. The approach path 58 connects the machining start position 56 and the second machining shape 242. Thus, the operator can easily obtain the figure data 20 including the machining start position 56 and the approach path 58.

Here, the second path addition unit 48 edits the figure data 20 so that the figure formed by the machining start position 56, the approach path 58, and the second machining shape 242 is congruent with the figure formed by the machining start position 50, the approach path 52, and the first machining shape 241.

According to the figure data edit device 10, the machining start position 56 and the approach path 58 are automatically added to the figure data 20. Therefore, the operator can easily obtain the figure data 20 including machining start positions and approach paths.

Moreover, the figure formed by the machining start position 56, the approach path 58, and the second machining shape 242 is congruent with the figure formed by the machining start position 50, the approach path 52, and the first machining shape 241. Thus, the figure data 20 can be automatically edited with the content reflecting the intention of the operator.

For example, when the figure data 20 is for die machining, the operator sets the machining start position 50 and the approach path 52 to the inside of the first machining shape 241. Here, if the machining start position 56 and the approach path 58 are set outside the second machining shape 242, the wire electrode cannot perform die machining along the second machining shape 242.

In this regard, the figure data editing apparatus 10 (second path addition unit 48) can automatically set the second machining start position 56 to the inside of the second machining shape 242 in accordance with the first machining start position 50 set to the inside of the first machining shape 241.

It is assumed that the operator assigns to the figure data 20 an approach path leading to the machining shape 243. In this case, the second path addition unit 48 automatically adds to the figure data 20 approach paths connected to each of the machining shapes 244 and 245 belonging to the same group GB as the machining shape 243.

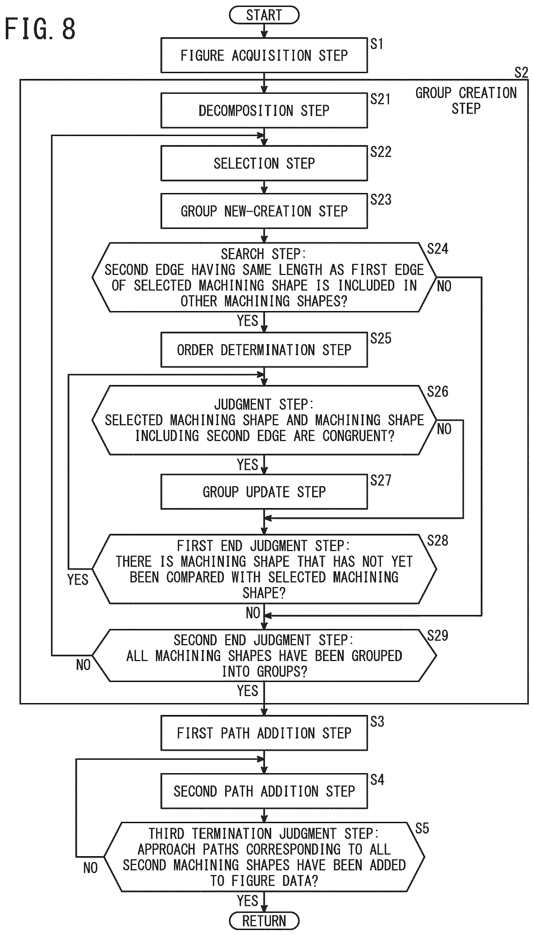

FIG. 8 is a flowchart illustrating the flow of the figure data edit method according to the embodiment.

The figure data edit device 10 can execute the figure data edit method of FIG. 8. The figure data edit method of FIG. 8 includes a figure acquisition step S1, a group creation step S2, a first path addition step (path addition step) S3, a second path addition step (automatic path addition step) S4, and an end judgment step (third end judgment step) S5.

In the figure acquisition step S1, the figure acquisition unit 26 acquires the figure data 20.

The group creation step S2 includes a decomposition step S21, a selection step S22, a group new-creation step S23, and a search step S24.

The decomposition step S21 is started after the completion of the figure acquisition step S1. In the decomposition step S21, the decomposition unit 32 decomposes each of the machining shapes 24 into figure elements (edges).

In the selection step S22, the selection unit 34 selects the selected machining shape 24. The selection unit 34 selects an ungrouped machining shape 24 as the selected machining shape 24 from among the machining shapes 24 in the figure data 20.

In the group new-creation step S23, the group creation unit 28 creates a group to which the selected machining shape 24 belongs. At least the selected machining shape 24 belongs to the created group.

In the search step S24, the search unit 36 searches for a second edge having the same length as the first edge of the selected machining shape 24 among the machining shapes 24 other than the selected machining shape 24. If the second edge is not retrieved (S24: NO), a second termination determination step S29, which will be described later, is executed.

The group creation step S2 further includes an order determination step S25, a judgment step S26, a group update step S27, a first end judgment step S28, and a second end judgment step S29.

The order determination step S25 is started when the second edge is retrieved (S24: YES). In the order determination step S25, the order determination unit 38 determines the first order and the second order. The first order is determined based on the first edge. The second order is determined based on the second edge.

In the judgment step S26, the judgment unit 40 compares the selected machining shape 24 with the machining shape 24 including the second edge based on the first order and the second order. Based on the comparison result, the judgment unit 40 judges whether the selected machining shape 24 and the machining shape 24 including the second edge are congruent.

The group update step S27 is started when it is determined that the selected machining shape 24 and the machining shape 24 including the second edge are congruent (S26: YES). In the group update step S27, the group creation unit 28 places, in the same group as the selected machining shape 24, the machining shape 24 that is determined to be congruent with the selected machining shape 24.

The first end judgment step S28 is started when it is judged that the selected machining shape 24 and the machining shape 24 including the second edge are not congruent (S26: NO). In the first end judgment step S28, the judgment unit 40 judges whether there is a machining shape 24 that includes the second edge and has not yet been compared with the selected machining shape 24.

If there is a machining shape 24 that includes the second edge and has not yet been compared with the selected machining shape 24 (S28: YES), the judgment step S26 is executed again. That is, if the machining shapes 24 include the second edge, the judgment step S26 is repeated until all the machining shapes 24 including the second edge are compared with the selected machining shape 24.

The second end judgment step S29 is started when all the machining shapes 24 including the second edge have been compared with the selected machining shape 24 (S28: NO). In the second end judgment step S29, the judgment unit 40 judges whether all the machining shapes 24 in the figure data 20 have been grouped into groups. If there are still ungrouped machining shapes 24 (S29: NO), the selection step S22 is executed again.

The first path addition step S3 is started when all the machining shapes 24 in the figure data 20 have been grouped (S29: YES) into groups. In the first path addition step S3, the first path addition unit 46 adds the machining start position 50 and the approach path 52 to the figure data 20 in accordance with the operation of the operator. The approach path 52 connects the first machining shape 24 with the machining start position 50.

The second path addition step S4 is started after the completion of the first path addition step S3. In the second path addition step S4, the second path addition unit 48 automatically adds the machining start position 56 and the approach path 58 to the figure data 20. The approach path 58 connects the second machining shape 24 with the machining start position 56. The second machining shape 24 is identified based on the execution result of the group creation step S2 and the execution result of the first path addition step S3.

The third termination judgment step S5 is started after the completion of the second path addition step S4. In the third end judgment step S5, it is judged whether the approach paths 58 and the machining start positions 56 corresponding to all the second machining shapes 24 have been added to the figure data 20. This judgment is performed by, for example, the second path addition unit 48.

If there remains the second machining shape 24 that is not connected to the machining start position 56 and the approach path 58 (S5: NO), the second path addition step S4 is executed again. Thus, the machining start position 56 and the approach path 58 are automatically added to all the machining shapes 24 congruent with the first machining shape 24.

According to the above described figure data edit method, the operator can easily obtain the figure data 20 with the second machining start position 56 and the approach path 58 added.

### [Modified Examples]

In the following, modified examples of the above embodiment will be described. However, the description overlapping with the above embodiment will be omitted in the following description as much as possible. Components already described in the above embodiment are given the same reference numerals as in the above embodiment unless otherwise noted.

### (Modified example 1)

The judgment unit 40 may judge that the machining shape 24 is congruent with the selected machining shape 24 when the machining shape 24 is a mirror image of the selected machining shape 24. In this case, the judgment unit 40 performs a process described next, for example.

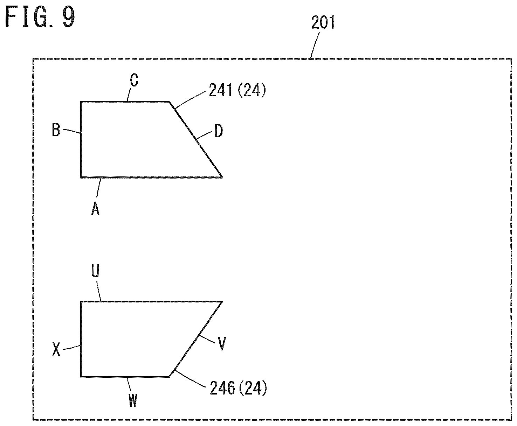

FIG. 9 is a diagram illustrating figure data 201 according to the first modified example.

The machining shape 241 in FIG. 9 is the same as the machining shape 241 in FIG. 3. The machining shape 246 in FIG. 9 is formed by an edge U, an edge V, an edge W, and an edge X.

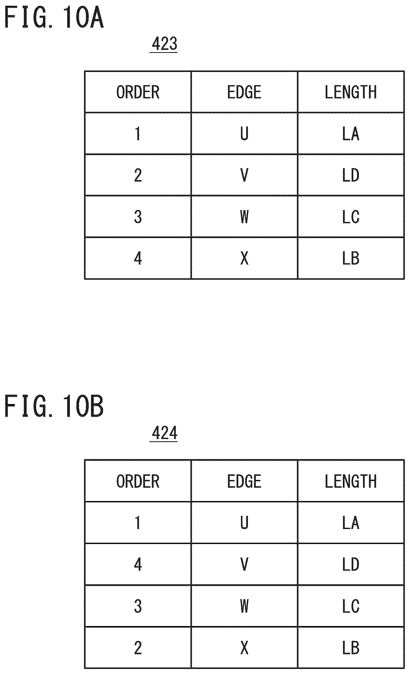

FIG. 10A is a table 423 illustrating a second order according to a first modified example. The format of the table 423 is the same as that of the table 422.

As a result of the search performed by the search unit 36, the length of the edge U is the same as that of the first edge A. In other words, the edge U is the second edge in the present modified example. The order determination unit 38 determines the second order of the machining shape 246 including the second edge U as shown in the table 423.

The second order of the table 423 is the order of following the edge U, the edge V, the edge W, and the edge X along the machining shape 246 in the same clockwise direction as the first order (see FIG. 4A). In this case, the edge B and the edge V correspond to each other based on the first order of the table 421 and the second order of the table 423. Also, the edge C and the edge W correspond to each other. The edge D and the edge X correspond to each other.

However, in this example, at least the length (LB) of the edge B and the length (LD) of the edge V are different. In this case, the order determination unit 38 reverses one of the first order and the second order.

FIG. 10B is a table 424 showing the order in which the second order in FIG. 10A is reversed. The format of the table 424 is the same as that of the table 423.

The order determination unit 38 reverses, for example, the second order in FIG. 10A as shown in FIG. 10B. The second order after the reverse is the order in which the edge U, the edge X, the edge W, and the edge V are followed in the counterclockwise direction along the machining shape 246.

The judgment unit 40 associates the edges of the selected machining shape 241 with the edges of the machining shape 246 again based on the first order and the second order after the reverse. This makes the edge B and the edge X correspond to each other. Also, the edge C and the edge W correspond to each other. The edge D and the edge V correspond to each other.

The judgment unit 40 compares the lengths of the two corresponding edges again. That is, the judgment unit 40 determines whether or not (4) the length of the edge B = the length of the edge X, (5) the length of the edge C = the length of the edge W, and (6) the length of the edge D = the length of the edge V hold.

When all of (4) to (6) hold, the judgment unit 40 compares the area of the selected machining shape 241 with the area of the machining shape 246. If the area of the selected machining shape 241 is the same as the area of the machining shape 246, then the machining shape 246 is a mirror image of the selected machining shape 241.

### (Modified example 2)

The machining shape (24) may be circular. In this case, the figure elements may include the diameter of the machining shape. When the plurality of machining shapes have a circular shape, the judgment unit 40 may judge whether the diameters of the machining shapes are equal. Two circles of the same diameter are congruent.

In addition, the machining shape (24) may include a curve (arc line). In this case, the figure elements may include the length of the curve and the curvature of the curve. The judgment unit 40 may also judge whether the lengths and curvatures of the curves are equal. Two curves with the same length and curvature are congruent. The figure elements regarding the curve (arc) may include a radius of curvature.

In addition, regarding the decision step S26, there is a case where the number of figure elements is different between the selected machining shape (24) and the machining shape (24) in the first place. In this case, the selected machining shape and the machining shape cannot be congruent. For example, when the selected machining shape is a polygon, the selected machining shape has a plurality of line segments (edges). In contrast, for example, when the machining shape is circular, the machining shape has only a single curve (closed curve). In other words, the circular shape does not have line segments (edges). Based on the above, the judgment unit 40 may judge that the machining shape does not correspond to the selected machining shape when the number of figure elements of the selected machining shape and the number of figure elements of the machining shape are different.

### (Modified example 3)

The group creation unit 28 may divide the machining shapes (24) into groups in each of which shapes are similar to each other.

To judge whether two machining shapes are similar to each other, the judgment unit 40 associates, for example, edges of one of the two machining shapes with edges of the other machining shape. This correspondence is established based on the order of the edges of each machining shape. However, the judgment unit 40 associates two edges having different lengths with each other.

The judgment unit 40 calculates a ratio of an edge of one of the two machining shapes to an edge of the other machining shape. The ratios are computed as many as the number of pairs of the corresponding two edges. That is, the judgment unit 40 calculates a plurality of ratios. If the ratios are all the same, the two machining shapes described above are similar to each other.

The method for judging whether two machining shapes are similar to each other is not limited as long as it can judge whether the selected machining shape is similar to the first machining shape.

The second path addition unit 48 automatically adds to the figure data 20 the approach path 58 and the machining start position 56 leading to the machining shape similar to the selected machining shape. The machining shape similar to the selected machining shape and the machining start position 56 are connected by the approach path 58.

The figure formed by the second machining start position 56, the approach path 58, and the machining shape similar to the selected machining shape is similar to the figure formed by the machining start position 50, the approach path, and the selected machining shape.

### (Modified example 4)

There is a situation where at the time when the figure acquisition unit 26 acquires the figure data 20, the first machining start position 50 has already been added to the first machining shape 24. In this case, the first path addition unit 46 adds only the first approach path 52 out of the first machining start position 50 and the first approach path 52 to the figure data 20 in accordance with the operator's operation.

### (Modified example 5)

The figure data edit device 10 may be configured integrally with the aforementioned CNC.

### (Modified example 6)

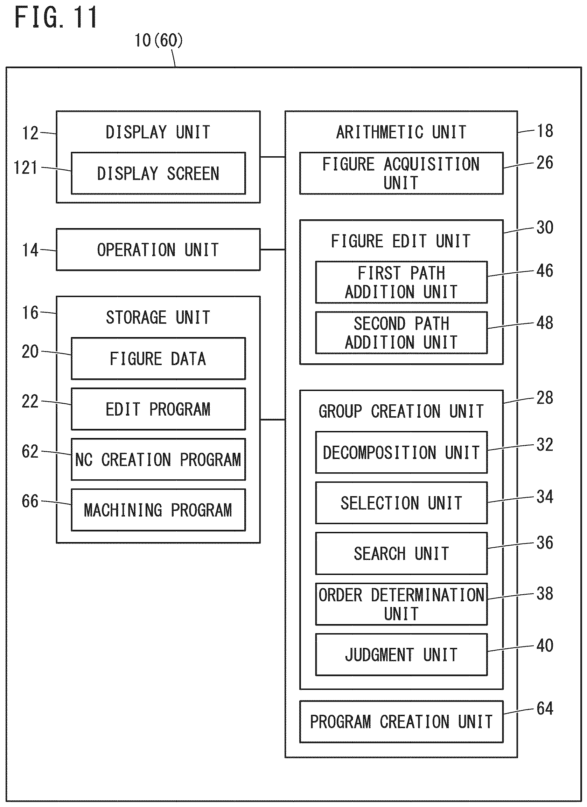

FIG. 11 is a schematic block diagram of a machining program creation device 60 provided with a figure data edit device 10.

The figure data edit device 10 may be configured integrally with the machining program creation device 60. The machining program creation device 60 in FIG. 11 includes the components (see FIG. 1) of the figure data edit device 10.

The machining program creation device 60 further includes an NC creation program 62 and a machining program creation unit 64.

The NC creation program 62 is a program for causing the machining program creation device 60 to create the machining program 66. The machining program 66 is a program for instructing the relative movements of the wire electrode of the wire electric discharge machine with respect to a workpiece. The NC creation program 62 is stored in the storage unit 16 of the machining program creation device 60.

The machining program creation unit 64 creates a machining program 66 based on the figure data 20. Thus, the operator obtains the machining program 66. The created machining program 66 may be stored in the storage unit 16. The operator may edit the created machining program 66.

The present invention is not limited to the above-described embodiment and the modified examples, and various configurations can be adopted without departing from the gist of the present invention.

### [Invention Derived from Embodiment]

The invention that can be understood from the above embodiment and the modified example will be described below.

### <First Invention>

The first invention is a figure data edit device (10) for editing figure data (20) indicating a plurality of machining shapes (24) to be machined by a wire electric discharge machine on one workpiece, comprising: a figure acquisition unit (26) that acquires the figure data; a group creation unit (28) that groups the plurality of machining shapes into groups in each of which shapes are congruent or similar to each other; a path addition unit (46) that adds a first approach path (52) leading to a first machining shape (24), which is any one of the plurality of machining shapes, to the figure data in response to an operation of an operator; and an automatic path addition unit (48) that automatically adds a second approach path (58) leading to a second machining shape (24) belonging to the same group as the first machining shape to the figure data so as to be congruent or similar to a figure formed by the first machining shape and the first approach path.

This facilitates the editing of figure data that represents machining shapes.

The path addition unit may add, to the figure data in response to an operation of an operator, a first machining start position (50) for machining the first machining shape and the first approach path connecting the first machining start position and the first machining shape, and the automatic path addition unit may automatically add to the figure data a second machining start position (56) for machining the second machining shape and the second approach path connecting the second machining start position and the second machining shape. This facilitates not only the addition of the approach path but also the addition of the machining start position.

The group creation unit may include a decomposition unit (32) that decomposes each of the plurality of machining shapes into a plurality of figure elements, and a judgment unit (40) that judges whether or not the plurality of machining shapes are congruent or similar to each other by comparing the plurality of figure elements of each of the plurality of machining shapes. Thus, it is judged at the level of figure elements whether or not the machining shapes are congruent or similar to each other.

The plurality of the figure elements of each of the plurality of machining shapes may include a plurality of edges forming the machining shape, and the group creation unit may further include a selection unit (34) that selects any one of the plurality of machining shapes, a search unit (36) that searches for a second edge having a same length as a first edge that is any one of the plurality of edges forming the selected machining shape, from among the plurality of edges forming the machining shape other than the selected machining shape, and an order determination unit (38) that determines, based on the first edge, a first order of the plurality of edges forming the selected machining shape, and determines, based on the second edge, a second order of the plurality of edges forming the machining shape including the second edge, the judgment unit may judge whether the selected machining shape and the machining shape including the second edge are congruent, based on the first order and the second order. Thus, it is judged whether the machining shape including the first edge and the machining shape including the second edge are congruent, regardless of the respective inclinations of the machining shape including the first edge and the machining shape including the second edge.

When there are a plurality of the second machining shapes, the automatic path addition unit may add to the figure data a plurality of the second approach paths leading respectively to the plurality of second machining shapes. This facilitates the editing of figure data including a plurality of second machining shapes.

### <Second Invention>

The second invention is a machining program creation device (60) including the figure data edit device of the first invention, and a machining program creation unit (64) that creates, based on the figure data a machining program (66) for instructing the relative movement of the wire electrode of the wire electric discharge machine with respect to the workpiece.

This facilitates the editing of figure data that represents machining shapes. Moreover, a machining program is created based on the edited figure data.

### <Third Invention>

A third invention is a figure data edit method for editing figure data (20) indicating a plurality of machining shapes (24) based on which a wire electric discharge machine machines one workpiece, comprising: a figure acquisition step (S1) that acquires the figure data; a group creation step (S2) that groups the plurality of machining shapes into groups in each of which shapes are congruent or similar to each other; a path addition step (S3) that adds a first approach path (52) leading to a first machining shape (24), which is any one of the plurality of machining shapes, to the figure data in response to an operation of an operator; and an automatic path addition step (S4) that automatically adds a second approach path (58) leading to a second machining shape (24) belonging to the same group as the first machining shape to the figure data so as to be congruent or similar to a figure formed by the first machining shape and the first approach path.

This facilitates the editing of figure data that represents machining shapes.

### Reference Signs List

10: figure data edit device
20, 201: figure data
24: machining shape
26: figure acquisition unit
28: group creation unit
32: decomposition unit
34: selection unit
36: search unit
38: order determination unit
40: judgment unit
46: route addition unit
48: automatic route addition unit
50: first machining start position
52: first approach path
56: second machining start position
58: second approach path
60: machining program creation device
64: machining program creation unit
66: machining program

## Claims

1. A figure data edit device (10) for editing figure data (20) indicating a plurality of machining shapes (24) based on which a wire electric discharge machine machines one workpiece, the figure data edit device comprising:
a figure acquisition unit (26) configured to acquire the figure data;
a group creation unit (28) configured to group the plurality of machining shapes into groups in each of which shapes are congruent or similar to each other;
a path addition unit (46) configured to add a first approach path (52) leading to a first machining shape (24), which is any one of the plurality of machining shapes, to the figure data in response to an operation of an operator; and
an automatic path addition unit (48) configured to automatically add a second approach path (58) leading to a second machining shape (24) belonging to a same group as the first machining shape, to the figure data in a manner so that a resultant figure is congruent or similar to a figure formed by the first machining shape and the first approach path.

2. The figure data edit device according to claim 1, wherein
the path addition unit adds a first machining start position (50) for machining the first machining shape and the first approach path connecting the first machining start position and the first machining shape, to the figure data in response to an operation of an operator, and
the automatic path addition unit automatically adds, to the figure data, a second machining start position (56) for machining the second machining shape and the second approach path connecting the second machining start position and the second machining shape.

3. The figure data edit device according to claim 1 or 2, wherein
the group creation unit includes:
a decomposition unit (32) configured to decompose each of the plurality of machining shapes into a plurality of figure elements; and
a judgment unit (40) configured to judge whether or not the plurality of machining shapes are congruent or similar to each other by comparing the plurality of figure elements of each of the plurality of machining shapes.

4. The figure data edit device according to claim 3, wherein
the plurality of figure elements of each of the plurality of machining shapes include a plurality of edges forming the machining shape,
the group creation unit includes:
a selection unit (34) configured to select any one of the plurality of machining shapes;
a search unit (36) configured to search for a second edge having a same length as a first edge that is any one of the plurality of edges forming the selected machining shape, from among the plurality of edges forming the machining shape other than the selected machining shape; and
an order determination unit (38) configured to determine, based on the first edge, a first order of the plurality of edges forming the selected machining shape, and determine, based on the second edge, a second order of the plurality of edges forming the machining shape including the second edge, and
the judgment unit judges whether the selected machining shape and the machining shape including the second edge are congruent, based on the first order and the second order.

5. The figure data edit device according to any one of claims 1 to 4, wherein
when there are a plurality of the second machining shapes, the automatic path addition unit adds, to the figure data, a plurality of the second approach paths leading respectively to the plurality of second machining shapes.

6. A machining program creation device (60) comprising:
the figure data edit device according to any one of claims 1 to 5; and
a machining program creation unit (64) configured to create, based on the figure data, a machining program (66) for instructing a relative movement of a wire electrode of the wire electric discharge machine with respect to the workpiece.

7. A figure data edit method for editing figure data (20) indicating a plurality of machining shapes (24) based on which a wire electric discharge machine machines one workpiece, the figure data edit method comprising:
a figure acquisition step (S1) of acquiring the figure data;
a group creation step (S2) of grouping the plurality of machining shapes into groups in each of which shapes are congruent or similar to each other;
a path addition step (S3) of adding a first approach path (52) leading to a first machining shape (24), which is any one of the plurality of machining shapes, to the figure data in response to an operation of an operator; and
an automatic path addition step (S4) of automatically adding a second approach path (58) leading to a second machining shape (24) belonging to a same group as the first machining shape, to the figure data in a manner so that a resultant figure is congruent or similar to a figure formed by the first machining shape and the first approach path.
